# EUROPEAN PATENT APPLICATION

(11) **EP 4 080 792 A1**
(43) Date of publication of application: **26.10.2022**
(21) Application number: 22167370.0
(22) Date of filing: 08.04.2022
(51) Int. Cl.: H04B 11/00, H04W 76/14, H04W 12/63, H04W 4/02, H04W 12/06, H04L 9/32

(54) **ULTRASONIC NOTIFICATION SOUNDS FOR CONTROLLING OPERATION OF A COMPUTING DEVICE**

(30) Priority: 20.04.2021 US 202163177167 P
(71) Applicant: LISNR, Cincinnati, OH 45202 (US)
(72) Inventor: ALTMAN, Chelsea, Oakland, California (US)
(74) Representative: J A Kemp LLP

(57) **Abstract**

Methods and systems for improved controlling of computing devices using notification sounds are provided. In one embodiment, a method is provided that includes generating a notification sound at a first computing device. The notification sound may contain an ultrasonic portion containing an audio transmission. The notification sound may be transmitted in response to a request from an application executing on the first computing device. The notification sound may be received at a second computing device, which may extract the ultrasonic portion of the notification sound. The audio transmission may be extracted from the ultrasonic portion and the second computing device may execute a computing process based on the contents of the audio transmission.

## Description

### PRIORITY CLAIM

The present application claims priority to and the benefit of U.S. Provisional Application 63/177,167 filed April 20, 2021, the entirety of which is herein incorporated by reference.

### BACKGROUND

Various software applications enable users to match with other individuals who provide services. For example, the software applications may execute on mobile phones to identify and match users with the individuals providing particular services. To receive these services, it may often be necessary for a user to identify the individual in the real world (e.g., when the individual is near the user).

### SUMMARY

The present disclosure presents new and innovative systems and methods for controlling operation of a computing device using ultrasonic notification sounds are provided. In a first aspect, a method is provided that includes generating, at a first computing device, a notification sound containing an ultrasonic portion and an audio transmission. The ultrasonic portion may contain the audio transmission. The method may also include transmitting the notification sound from the first computing device in response to a request from an application executing on the first computing device and receiving the notification sound at a second computing device. The method may further include extracting, at the second computing device, the ultrasonic portion of the notification sound, extracting an audio transmission from the ultrasonic portion of the notification sound, and executing, on the second computing device, a computing process based on contents of the audio transmission.

In a second aspect according to the first aspect, the request is a push notification request.

In a third aspect according to any of the first and second aspects, the notification sound further includes an audible portion.

In a fourth aspect according to the third aspect, the audible portion and ultrasonic portion occur at least partially at the same time during the notification sound.

In a fifth aspect according to any of the first through fourth aspects, the audio transmission contains a payload that identifies the computing process.

In a sixth aspect according to the fifth aspect, the payload contains a static identifier associated with one or more of the first computing device and the application executing on the first computing device.

In a seventh aspect according to the sixth aspect, the computing process is identified based on an identifier corresponding to the static identifier in a database.

In an eighth aspect according to any of the sixth and seventh aspects, the payload contains a dynamic identifier uniquely generated to identify the computing process.

In a ninth aspect according to any of the first through eighth aspects, the computing process includes processing a payment.

In a tenth aspect according to any of the first through ninth aspects, the computing process includes authenticating a user with a digital service.

In an eleventh aspect according to the tenth aspect, the notification sound is transmitted in response to a voice request received by the first computing device.

In a twelfth aspect according to the eleventh aspect, the first computing device is a smart speaker associated with a voice assistant and the second computing device requires authentication.

In a thirteenth aspect according to any of the first through twelfth aspects, the computing process includes communicatively coupling the first and second computing devices.

In a fourteenth aspect according to the thirteenth aspect, at least one of the first computing device and the second computing device is at least one of a wireless speaker, a wireless network access point, a smart home device, and a video game console.

In a fifteenth aspect, a system is provided that includes a processor and a memory. The memory may store instructions which, when executed by the processor, cause the processor to generate, at a first computing device, a notification sound containing an ultrasonic portion and an audio transmission. The ultrasonic portion may contain the audio transmission. The instructions may also cause the processor to transmit the notification sound from the first computing device in response to a request from an application executing on the first computing device and receive the notification sound at a second computing device. The instructions may further cause the processor to extract, at the second computing device, the ultrasonic portion of the notification sound, extract an audio transmission from the ultrasonic portion of the notification sound, and execute, on the first computing device, a computing process based on contents of the audio transmission.

In a sixteenth aspect, a method is provided that includes receiving, at a first computing device, a notification sound transmitted by a second computing device and extracting an ultrasonic portion of the notification sound. The method may also include extracting an audio transmission from the ultrasonic portion of the notification sound and executing, on the first computing device, a computing process based on contents of the audio transmission.

In a seventeenth aspect according to the sixteenth aspect, the first computing device transmitted the notification sound in response to a push notification received by the first computing device.

In an eighteenth aspect according to any of the sixteenth and seventeenth aspects, the notification sound further includes an audible portion that occurs at least partially in parallel during the notification sound.

In a nineteenth aspect according to any of the sixteenth through eighteenth aspects, the audio transmission contains at least one of (i) a static identifier associated with one or more of the second computing device and an application executing on the first computing device and (ii) a dynamic identifier uniquely generated to identify the computing process.

In a twentieth aspect according to any of the sixteenth through nineteenth aspects, the computing process includes at least one of (i) processing a payment, (ii) authenticating a user with a digital service, and (iii) communicatively coupling the first and second computing devices.

The features and advantages described herein are not all-inclusive and, in particular, many additional features and advantages will be apparent to one of ordinary skill in the art in view of the figures and description. Moreover, it should be noted that the language used in the specification has been principally selected for readability and instructional purposes, and not to limit the scope of the disclosed subject matter.

### BRIEF DESCRIPTION OF THE FIGURES

FIG. 1 illustrates a system according to an exemplary embodiment of the present disclosure.
FIG. 2 illustrates an audio transmission according to an exemplary embodiment of the present disclosure.
FIG. 3 illustrates a scenario according to an exemplary embodiment of the present disclosure.
FIG. 4 illustrates an audio channel distribution according to an exemplary embodiment of the present disclosure.
FIG. 5 illustrates a system according to an exemplary embodiment of the present disclosure.
FIGs. 6-8 illustrate notification sound transmission scenarios according to exemplary embodiments of the present disclosure.
FIG. 9 illustrates a method according to an exemplary embodiment of the present disclosure.
FIG. 10 illustrates a computing system according to an exemplary embodiment of the present disclosure.

### DETAILED DESCRIPTION OF EXAMPLE EMBODIMENTS

Aspects of the present disclosure relate to transmitting and receiving audio transmissions between multiple devices. In certain aspects, the computing devices may transmit or receive audio transmissions contained within notification sounds. One or more computing processes may be executed in response to detecting audio transmissions.

Various techniques and systems exist to exchange data between computing devices located near one another without connecting to the same communication network. For example, the computing devices may transmit data via direct communication links between the devices. In particular, data may be transmitted according to one or more direct wireless communication protocols, such as Bluetooth ^{®}, ZigBee ^{®}, Z-Wave ^{®}, RadioFrequency Identification (RFID), Near Field Communication (NFC), and Wi-Fi ^{®} (e.g., direct Wi-Fi ^{®} links between the computing devices). However, each of these protocols relies on data transmission using electromagnetic waves at various frequencies. Therefore, in certain instances (e.g., ZigBee ^{®}, Z-Wave ^{®}, RFID, and NFC), computing devices may typically require specialized hardware to transmit data according to these wireless communication protocols. In further instances (e.g., Bluetooth ^{®}, ZigBee ^{®}, Z-Wave ^{®}, and Wi-Fi ^{®}), computing devices may typically have to be communicatively paired in order to transmit data according to these wireless communication protocols. Such communicative pairing can be cumbersome and slow, reducing the likelihood that users associated with one or both of the computing devices will utilize the protocols to transmit data.

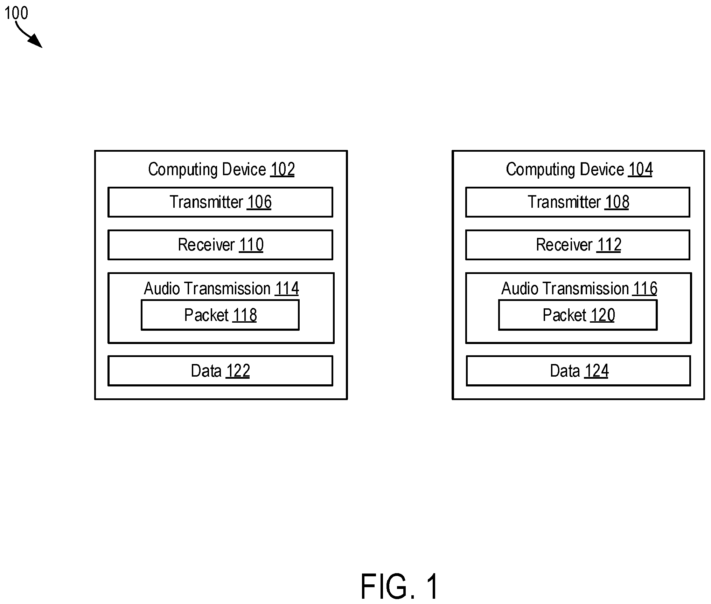

Therefore, there exists a need to wirelessly transmit data in a way that (i) does not require specialized hardware and (ii) does not require communicative pairing prior to data transmission. One solution to this problem is to transmit data using audio transmissions. For example, FIG. 1 illustrates a system 100 according to an exemplary embodiment of the present disclosure. The system 100 includes two computing devices 102, 104 configured to transmit data 122, 124 using audio transmissions 114, 116. In particular, each computing device 102, 104 includes a transmitter 106, 108 and a receiver 110, 112. The transmitters 106, 108 may include any type of device capable of generating audio signals, such as speakers or transducers. In certain implementations, the transmitters 106, 108 may be implemented as a speaker built into the computing device 102, 104. For example, one or both of the computing devices may be a smartphone, tablet computer, and/or laptop with a built-in speaker that performs the functions of the transmitter 106, 108. In other implementations, the transmitters 106, 108 may be implemented as a speaker or transducer external to the computing device 102, 104. For example, the transmitters 106, 108 may be implemented as one or more speakers or transducers externally connected to the computing device 102, 104. In still further implementations, transmitters 106, 108 may be communicatively separate from computing devices.

The receivers 110, 112 may include any type of device capable of receiving audio transmissions and converting the audio transmissions into signals (e.g., digital signals) capable of being processed by a processor of the computing device, such as microphones. In other implementations, the receivers 110, 112 may be implemented as a microphone built into the computing device 102, 104. For example, one or both of the computing devices may be a smartphone, tablet computer, and/or laptop with a built-in microphone that performs the functions of the receivers 110, 112. In other implementations, the receivers 110, 112 may be implemented as a microphone external to the computing device 102, 104. For example, the receivers 110, 112 may be implemented as one or more microphones external to the computing device 102, 104 that are communicatively coupled to the computing device 102, 104. In certain implementations, the transmitter 106, 108 and receiver 110, 112 may be implemented as a single device connected to the computing device. For example, the transmitter 106, 108 and receiver 110, 112 may be implemented as a single device containing at least one speaker and at least one microphone that is communicatively coupled to the computing device 102, 104.

In certain implementations, one or both of the computing devices 102, 104 may include multiple transmitters 106, 108 and/or multiple receivers 110, 112. For example, the computing device 104 may include multiple transmitters 108 and multiple receivers 112 arranged in multiple locations so that the computing device 104 can communicate with the computing device 102 in multiple locations (e.g., when the computing device 102 is located near at least one of the multiple transmitters 108 and multiple receivers 112. In additional or alternative implementations, one or both of the computing devices 102, 104 may include multiple transmitters 106, 108 and/or multiple receivers 110, 112 in a single location. For example, the computing device 104 may include multiple transmitters 108 and multiple receivers 112 located at a single location. The multiple transmitters 108 and multiple receivers 112 may be arranged to improve coverage and/or signal quality in an area near the single location. For example, the multiple transmitters 108 and multiple receivers 112 may be arranged in an array or other configuration so that other computing devices 102 receive audio transmissions 114, 116 of similar quality regardless of their location relative to the transmitters 108 and receivers 112 (e.g., regardless of the location of the computing devices 102 within a service area of the transmitters 108 and receivers 112).

The computing devices 102, 104 may generate audio transmissions 114, 116 to transmit data 122, 124 to one another. For example, the computing devices 102 may generate one or more audio transmissions 114 to transmit data 122 from the computing device 102 to the computing device 104. As another example, the computing device 104 may generate one or more audio transmissions 116 to transmit data 124 from the computing device 104 to the computing device 102. In particular, the computing devices 102, 104 may create one or more packets 118, 120 based on the data 122, 124 (e.g., including a portion of the data 122, 124) for transmission using the audio transmissions 114, 116. To generate the audio transmission 114, 116, the computing devices 102, 104 may modulate the packets 118, 120 onto an audio carrier signal. The computing devices 102, 104 may then transmit the audio transmission 114, 116 via the transmitter 106, 108, which may then be received by the receiver 110, 112 of the other computing devices 102, 104. In certain instances (e.g., where the data 122, 124 exceeds a predetermined threshold for the size of a packet 118, 120), the data 122, 124 may be divided into multiple packets 118, 120 for transmission using separate audio transmissions 114, 116.

Accordingly, by generating and transmitting audio transmissions 114, 116 in this way, the computing devices 102, 104 may be able to transmit data 122, 124 to one another without having to communicatively pair the computing devices 102, 104. Rather, a computing device 102, 104 can listen for audio transmissions 114, 116 received via the receivers 110, 112 from another computing device 102, 104 without having to communicatively pair with the other computing device 102, 104. Also, because these techniques can utilize conventional computer hardware like speakers and microphones, the computing devices 102, 104 do not require specialized hardware to transmit the data 122, 124.

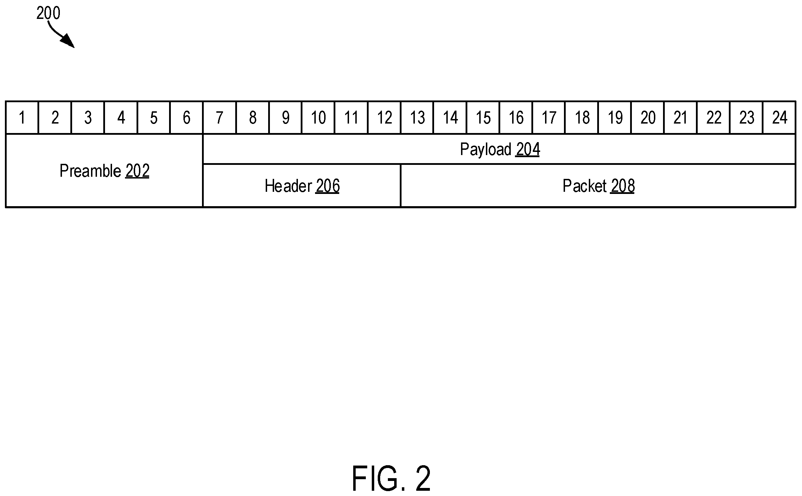

FIG. 2 illustrates an audio transmission 200 according to an exemplary embodiment of the present disclosure. The audio transmission 200 may be used to transmit data from one computing device to another computing device. For example, referring to FIG. 1, the audio transmission 200 may be an example implementation of the audio transmissions 114, 116 generated by the computing devices 102, 104. The audio transmission 200 includes multiple symbols 1-24, which may correspond to discrete time periods within the audio transmission 200. For example, each symbol 1-24 may correspond to 2 ms of the audio transmission 200. In other examples, the symbols 1-24 may correspond to other time periods within the audio transmission 200 (e.g., 1 ms, 10 ms, 20 ms, 40 ms). Each symbol 1-24 may include one or more frequencies used to encode information within the audio transmission 200. For example, the one or more frequencies may be modulated in order to encode information in the audio transmission 200 (e.g., certain frequencies may correspond to certain pieces of information). In another example, the phases of the frequencies may additionally or alternatively be modulated in order to encode information in the audio transmission 200 (e.g., certain phase differences from a reference signal may correspond to certain pieces of information).

In particular, certain symbols 1-24 may correspond to particular types of information within the audio transmission 200. For example, the symbols 1-6 may correspond to a preamble 202 and symbols 7-24 may correspond to a payload 204. The preamble 202 may contain predetermined symbols produced at predetermined points of time (e.g., by varying one or more of the frequency and the phase in a predetermined manner for the frequencies 1-6). The preamble 202 may be used to identify the audio transmission 200 to a computing device receiving the audio transmission 200. For example, a receiver of the computing device receiving audio transmissions such as the audio transmission 200 may also receive other types of audio data (e.g., audio data from environmental noises and/or audio interference). The preamble 202 may therefore be configured to identify audio data corresponding to the audio transmission 200 when received by the receiver of the computing device. In particular, the computing device may be configured to analyze incoming audio data from the receiver and to disregard audio data that does not include the preamble 202. Upon detecting the preamble 202, the computing device may begin receiving and processing the audio transmission 200. The preamble may also be used to align processing of the audio transmission 200 with the symbols 1-24 of the audio transmission 200. In particular, by indicating the beginning of the audio transmission 200, the preamble 202 may enable the computing device receiving the audio transmission 200 to properly align its processing of the audio transmission with the symbols 1-24.

The payload 204 may include the data intended for transmission, along with other information enabling proper processing of the data intended for transmission. In particular, the packets 208 may contain data desired for transmission by the computing device generating the audio transmission 200. For example, and referring to FIG. 1, the packet 208 may correspond to the packets 118, 120 which may contain all or part of the data 122, 124. The header 206 may include additional information for relevant processing of data contained within the packet 208. For example, the header 206 may include routing information for a final destination of the data (e.g., a server external to the computing device receiving the audio transmission 200). The header 206 may also indicate an originating source of the data (e.g., an identifier of the computing device transmitting the audio transmission 200 and/or a user associated with the computing device transmitting the audio transmission 200).

Symbols 1-24 and their configuration depicted in FIG. 2 are merely exemplary. It should be understood that certain implementations of the audio transmission 200 may use more or fewer symbols, and that one or more of the preamble 202, the payload 204, the header 206, and/or the packet 208 may use more or fewer symbols than those depicted and may be arranged in a different order or configuration within the audio transmission 200.

The techniques described above may be used to improve the security of and automate the execution of computing processes at the request of other computing devices. In particular, various computing processes may typically need to be executed by one computing device on behalf of a user of another computing device. For example, a user of a first computing device may need to provide payment information to a second computing device in order for the second computing device to process a payment on behalf of the user. As another example, users may need to communicatively couple a first computing device to a second computing device, which may require at least one of the first and second computing devices to provide pairing information. As a further example, a user of a first computing device may need to access a computing service executing on a second computing device and may accordingly need to authenticate themselves with the computing service before gaining access.

Typically, in such instances, the user may be required to manually enter information from one computing device to another computing device. However, manually entering information in this way may be cumbersome and error-prone, which may adversely impact the user's ability to request or control the execution of necessary computing processes. Additionally or alternatively, the computing devices may communicate over existing infrastructure networks, such as Wi-Fi or cellular data networks. However, using existing infrastructure networks may not always be possible (e.g., where no public Wi-Fi exists, where no cellular data signal exists). Further, existing infrastructure networks may be vulnerable to security attacks, such as man-in-the-middle attacks and the like. Accordingly, there exists a need to control the execution of computing processes across multiple computing devices without relying on manual entry of information and/or communication over infrastructure networks (e.g., networks using RF or similar protocols).

One solution to this problem is to execute computing processes in response to audio transmissions received from other computing devices. For example, the audio transmissions may include identifiers of computing process(es) to execute and/or additional information to be used in executing the computing process. The audio transmissions may be included within notification sounds utilized by the computing devices. For example, the computing devices may include a notification framework that allows for notification sounds to be played, and the audio transmissions may be included within the notification sounds. When execution of a computing process on another computing device is necessary, a computing device may generate or retrieve an audio transmission and may include the audio transmission within a notification sound. The computing device may then present the notification, including the notification sound, which may be transmitted using a speaker or other transmitter of the computing device. The other computing device may receive the audio transmission and may extract the information stored within the audio transmission. Based on the contents of the audio transmission, the receiving computing device may perform a corresponding computing process.

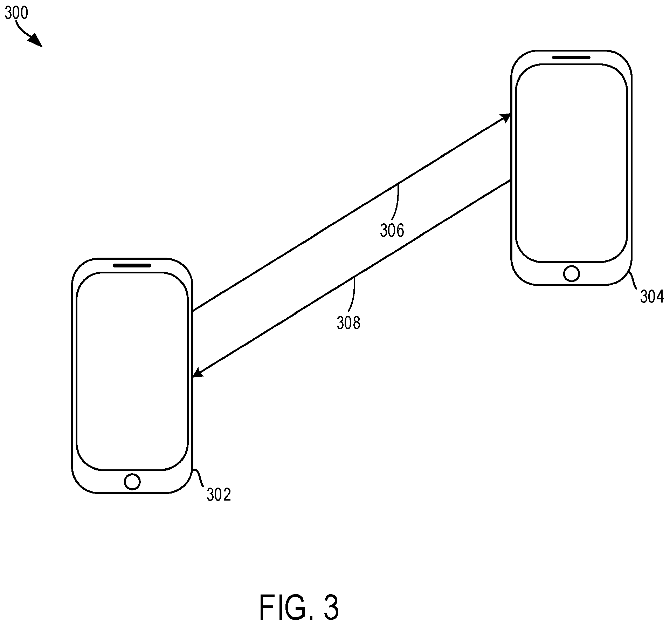

FIG. 3 illustrates a scenario 300 according to an exemplary embodiment of the present disclosure. In the scenario 300, a computing device 302 transmits an audio transmission 306 to the computing device 304. The computing device 304 also transmits an audio transmission 308 to the computing device 302. As depicted, both of the computing devices 302, 304 are mobile devices (e.g., smartphones). Accordingly, the audio transmissions 306, 308 may be transmitted using speakers of the mobile devices and may be received using microphones of the mobile devices. In certain implementations, the audio transmissions 306, 308 may be transmitted at different times. For example, the computing device 302 may transmit the audio transmission 306 before the computing device 304 transmits the audio transmission 308. In other implementations, the audio transmissions 306, 308 may be transmitted at least partially at the same time. In such instances, the audio transmissions 306, 308 may be transmitted on different channels (e.g., using different carrier frequencies), as explained further below.

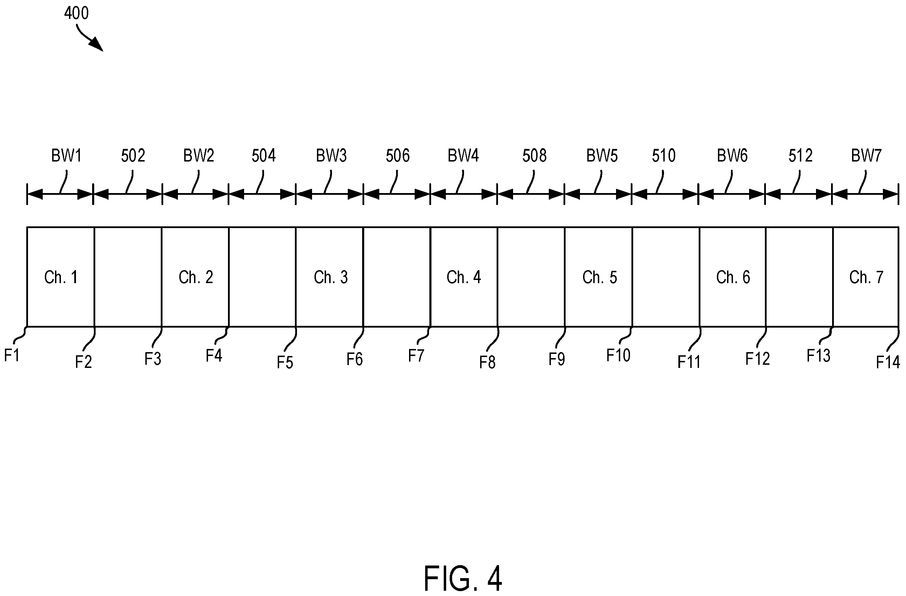

FIG. 4 illustrates an audio channel distribution 400 according to an exemplary embodiment of the present disclosure. The audio channel distribution 400 includes audio channels 1-7 distributed along a frequency spectrum F1-F15. Each audio channel 1-7 has a corresponding bandwidth BW1-7. In particular, audio channel 1 has a bandwidth BW1 spanning from F1 to F2, audio channel 2 has a bandwidth BW2 spanning from F3 to F4, audio channel 3 has a bandwidth BW3 spanning from F5 to F6, audio channel 4 has a bandwidth BW4 spanning from F7 to F8, audio channel 4 has a bandwidth BW5 spanning from F9 to F10, audio channel 6 has a bandwidth BW6 spanning from F11 to F12, and audio channel 7 has a bandwidth BW7 spanning from F13 to F14. The audio channels 1-7 may represent a range of carrier frequencies that can be used to transmit audio transmissions. For example, to transmit an audio transmission according to an audio channel 1, a computing device may utilize a carrier frequency between F1 and F2. In certain implementations, the computing device may use a carrier frequency halfway between F1 and F2. As a specific example, where F1 is 9.5 kHz and F2 is 10.5 kHz, a computing device transmitting an audio transmission using audio channel 1 may preferebly utilize a carrier frequency between 9.8 and 10.2 kHz, such as 10 kHz.

The audio channels 1-7 are also separated by frequency bands 402, 404, 406, 408, 410, 412. In particular, frequency band 402 separates audio channels 1 and 2 and spans from frequency F2 to F3, frequency band 404 separates audio channels 2 and 3 and spans from frequency F4 to F5, frequency band 406 separates audio channels 3 and 4 and spans from frequency F6 to F7, frequency band 408 separates audio channels 4 and 5 and spans from frequency F8 to F9, frequency band 410 separates audio channels 5 and 6 and spans from frequency F10 to F11, and frequency band 412 separates audio channels 6 and 7 and spans from frequency F12 to F13. The frequency bands 402, 404, 406, 408, 410, 412 may separate the audio channels 1-7, which may help prevent audio transmissions from interfering with one another.

In certain implementations, the audio channels 1-7 may have equal bandwidths BW1-7. For example, each of the bandwidths BW1-7 may be 1 kHz wide, although other implementations may also be used (e.g., bandwidths of 500 Hz, 2 kHz, 5 kHz). In additional or alternative implementations, the audio channels 1-7 may have different bandwidth BW1-7. Additionally, in certain implementations, the frequency bands 402, 404, 406, 408, 410, 412 may be of equal width. For example, each of the frequency bands 402, 404, 406, 408, 410, 412 may be 1 kHz wide, although other implementations may also be used (e.g., frequency bands of 500 Hz, 2 kHz, 5 kHz). In further implementations, the frequency bands 402, 404, 406, 408, 410, 412 may have different widths.

In certain implementations, the bandwidths BW1-7 and frequency bands 402, 404, 406, 408, 410, 412 may have the same width. For example, the bandwidths BW1-7 and frequency bands 402, 404, 406, 408, 412 may all have a width of 1 kHz. In such instances, frequency F1 may be 9.5 kHz, frequency F2 may be 10.5 kHz, frequency F3 may be 11.5 kHz, frequency F4 may be 12.5 kHz, frequency F5 may be 13.5 kHz, frequency F6 may be 14.5 kHz, frequency F7 may be 15.5 kHz, frequency F8 may be 16.5 kHz, frequency F9 may be 17.5 kHz, frequency F10 may be 18.5 kHz, frequency F11 may be 19.5 kHz, frequency F12 may be 20.5 kHz, frequency F13 may be 21.5 kHz, and frequency F14 may be 22.5 kHz.

It should also be understood that alternative embodiments of the audio channel distribution 400 may use additional or fewer channels. For example, alternative implementations may include 10 audio channels. As another example, alternative implementations may include five or six audio channels.

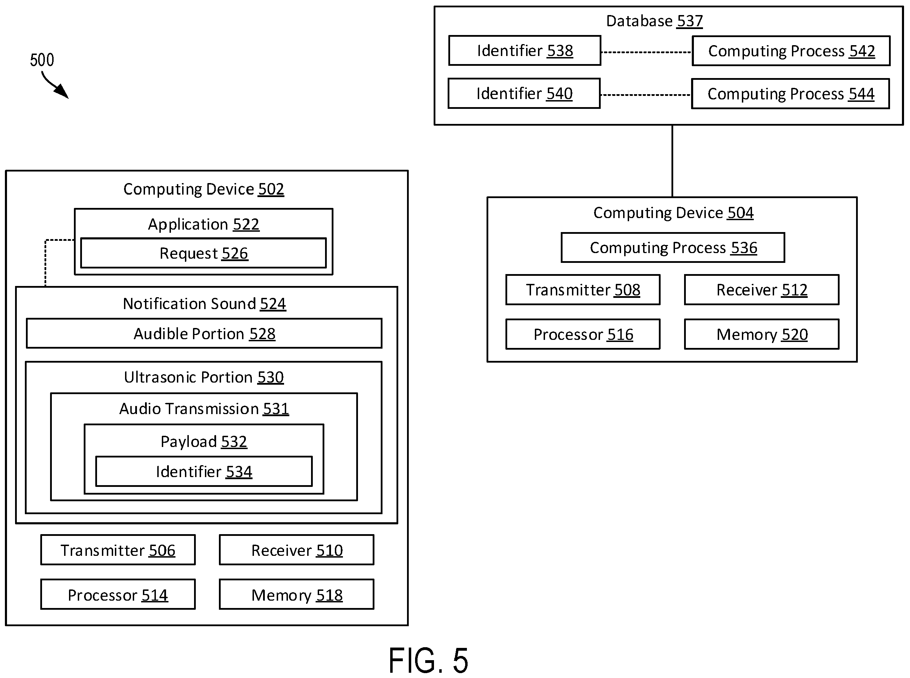

FIG. 5 illustrates a system 500 according to an exemplary embodiment of the present disclosure. The system 500 may be configured to enable computing devices 502, 504 to communicate using audio transmissions embedded within notification sound produced by one or both of the computing devices 502, 504. In particular, the computing devices 502, 504 may include any of smartphones, tablets, laptops, personal computers, smart watches, point-of-sale devices, smart speaker devices, network access points, smart home devices, or any other type of computing system. The computing devices 502, 504 include transmitters 506, 508 and receivers 510, 512, which may be used to transmit and receive audio data, similar to the transmitters 106, 108 and receivers 110, 112. In particular, one or both of the transmitters 506, 508 may be capable of generating and transmitting both audible and ultrasonic audio signals, and one or both of the receivers 510, 512 may be capable of receiving audible and ultrasonic audio signals.

The computing device 502 includes an application 522, which may be executing on the computing device 502. For example, the application 522 may include a software application or other program executing to provide one or more services via the computing device 502. For example, where the computing device 502 is a smartphone, tablet, or other computer system, the application 522 may be an application executing on the computing device 502 that is accessible via a display of the computing device (e.g., via a graphical user interface). As another example, where the computing device 502 is a wireless speaker, smart home device, or the like, the application 522 may include an operating system process or firmware process executing to ensure proper operation of the computing device 502 (e.g., such as proper operation of wireless computing interfaces, data management, power management, or other services necessary to ensure proper operation of the computing device 502. As a further example, where the computing device 502 is associated with a smart speaker device providing access to a voice-enabled virtual assistant, the application 522 may include one or more software programs providing services that are accessible via the voice-enable virtual assistant. The above-discussed implementations are merely exemplary, and additional or alternative implementations may occur to those skilled in the art in light of the contents of the present disclosure. All such implementations are considered within the scope of the present disclosure.

The application 522 contains a request 526. The request 526 may be generated by the application 522 and/or may be received by the application 522 from another computing device (not depicted). For example, the application 522 may be configured to generate a request 526 to transmit a notification sound after the occurrence of one or more events within the application 522. In one instance, the application 522 may generate a request 526 in response to a request to process a payment received by the application 522 (e.g., from a user of the computing device 502). Additionally or alternatively, the application 522 may receive the request 526 from a computing service executing another computing device (e.g., a computing device within a cloud-computing environment). For example, the application 522 may receive the request 526 as a push notification request (e.g., a local push notification request and/or a push notification request received from a server, such as a server associated with the application 522).. Additionally or alternatively, the application 522 may receive the request 526 from another computing device associated with a computing service requiring authentication, as discussed further below. In still further implementations, the request 526 may be received directly from a user. For example, the user may issue a voice request to a computing device 502 (e.g., a computing device 502 implementing one or more voice controlled virtual assistants).

In response to the request 526, the application 522 may generate a notification for the computing device 502. The notification made include one or more visual/graphical elements for display (e.g., text elements, graphics, pictures, and the like) and/or one or more audio elements for playback via a speaker, such as the transmitter 506. Conventional notifications may include audio elements within an audible spectrum to alert a user of the computing device 502 and/or other individuals located near the computing device 502 that a notification has been issued. Audio elements may additionally or alternatively include one or more spoken elements, such as voice feedback regarding the contents of the notification or a voice notification from a voice-enabled virtual assistant. As depicted, the computing device 502 may generate a notification sound 524 for transmittal via the transmitter 506 with the notification. The notification sound 524 includes an audible portion 528, which may include one or more of the audible elements for notifications discussed above.

The notification sound 524 also includes an ultrasonic portion 530, which may be generated to contain an audio transmission 531. In particular, the audio transmission 531 may include a payload 532, similar to the payload 204. The payload 532 may contain an identifier 534. The identifier 534 may identify a computing process to be performed by another computing device, such as the computing device 504, as explained further below. In certain instances, the identifier 534 may be a static identifier that remains consistent between multiple audio transmissions 531 transmitted by the computing device 502 at different times. For example, the identifier 534 may be generated to uniquely and consistently identify the computing device 502 and/or a user of the computing device 502. Additionally or alternatively, the identifier 534 may be a dynamic identifier that is uniquely generated for individual audio transmissions 531 prior to transmission. For example, the identifier 534 may be dynamically generated to specifically identify a computing process for execution (e.g., to include a process name or identifier) and/or to dynamically include information for use in executing each occurrence of the computing process.

In certain instances, the audible portion 528 and the ultrasonic portion 530 may occur at different times. For example, the audible portion 528 may be transmitted before the ultrasonic portion 530. As another example, the ultrasonic portion 530 may be transmitted before the audible portion 528. In additional or alternative instances, the audible portion 528 and the ultrasonic portion 530 may occur at least partially at the same time. For example, the notification sound 524 may include transmitting the audible portion 528 at least partially at the same time as the ultrasonic portion 530 using the transmitter 506. In certain instances, the audible portion 528 and the ultrasonic portion 530 may have the same duration, and the notification sound 524 may include both the audible portion 528 and the ultrasonic portion 530 at the same time. In other instances, the audible portion 528 may be longer than the ultrasonic portion 530, and the notification sound 524 may include playing back the ultrasonic portion 530 during a portion of the audible portion 528. In further instances, the ultrasonic portion 530 may be longer than the audible portion 528, and the notification sound 524 may include playing back the audible portion 528 during a portion of the ultrasonic portion 530. In certain implementations, when generating the notification sound 524 based on the audible portion 528 and the ultrasonic portion 530, the audible portion 528 may be modified to ensure that the contents of the audible portion 528 do not interfere with the ultrasonic portion 530. In particular, the audible portion 528 may be passed through a low-pass filter to remove high frequencies from the audible portion 528 (e.g., frequencies greater than 15 kHz, 18 kHz, 20 kHz). Removing frequencies in this manner may improve the accuracy of audio transmissions 531 transmitted using notification sound 524 by removing interference from other portions of the notification sound 524. In certain instances, operating system limitations for the computing device 502 may limit the duration of the notification sound 524. For example, a computing device 502 executing the iOS ^{®} operating system may be limited to notification sound 524 that are 5 seconds or shorter if a screen of the computing device 502 is off and a persistent notifications setting is off for the application that generated the notification sound 524 and 30 seconds or shorter if the screen is on and/or if the screen is off and the persistent notifications setting is on for the application that generated the notification sound 524. In certain instances, a computing device 502 executing the Android ^{®} operating system may not be limited in duration for notification sound 524.

The computing device 502 may be configured to play the notification sound 524 upon receiving the request 526. For example, the notification sound 524 may be provided to the computing device 502 as an audio file (e.g., an MP3 audio file, an MP4 audio file, an AAC audio file, a WAV audio file, and the like) for playback. For example, the notification sound 524 may be provided to a notification framework of an operating system of the computing device 502, such as a notification framework for applications provided by an iOS ^{®} operating system, an Android ^{®} operating system, a Windows ^{®} operating system, and a macOS ^{®} operating system. In particular, the notification sound 524 may be provided in conjunction with notification contents (e.g., the payload 532) discussed above. Upon receiving the notification contents and/or the notification sound 524, the computing device 502 may playback the notification sound 524 audio file via the transmitter 506 (e.g., a speaker coupled to and/or included within the computing device 502), thereby transmitting the notification sound 524 within an area surrounding the computing device 502. A size of the area surrounding the computing device 502 may differ depending on the volume in which the notification sound 524 is generated and/or transmitted. In various embodiments, the size of the area may differ from 0-20 feet from the computing device 502.

Other computing devices located within the area surrounding the computing device 502 may receive the audio transmission 531. For example, the computing device 504 may be located within an area surrounding the computing device 502. The computing device 504 may receive the audio transmission 531 via a receiver 512 (e.g., a microphone coupled to or contained within the computing device 504. In particular, the computing device 504 may be configured (e.g., at least temporarily) to monitor for ultrasonic audio transmissions. The computing device 504 may detect the presence of the audio transmission 531 based on a predetermined portion, such as a preamble similar to the preamble 202 discussed above. In particular, the computing device 504 may receive audio data from the receiver 512, including both audible and inaudible (e.g., ultrasonic) frequencies.

The computing device 504 may extract a particular frequency range, such as an ultrasonic frequency range (e.g., greater than 20 kHz) for further analysis. The computing device 504 may analyze the ultrasonic audio data for the presence of an audio transmission 531 by determining when a sequence of the ultrasonic audio data matches and expected predetermined portion of the audio transmission, such as a preamble of the audio transmission. Predetermined portions of audio transmissions, such as preambles, are discussed in greater detail in U.S. Patent Application No. 16/879,333, entitled "DETECTION AND SYNCHRONIZATION OF AUDIO TRANSMISSIONS USING COMPLEX AUDIO SIGNALS" and filed on May 20, 2020, which is hereby incorporated by reference. Upon detecting the predetermined portion, the computing device 504 may extract the audio transmission 531 from the ultrasonic audio data. A payload 532 of the audio transmission 531 may then be identified based on when the predetermined portion was detected, and the identifier 534 may be extracted from the payload 532. In this way, the computing device 504 may receive the identifier 534 from the computing device 502 using an audio transmission 531 that is part of a notification sound 524 transmitted by the computing device 502. In certain implementations, such as the implementations discussed further below, the audio transmission 531 may include additional or alternative information to the identifier 534, such as information that may be used while executing the computing process 536.

Once the computing device 504 has received the identifier 534, the computing device 504 may be configured to execute a computing process 536. In particular, the computing device 504 may be configured to execute a computing process 536 associated with the received identifier 534. As will be explained further below, the identifier 534 may specifically identify a computing process 536 for execution. Additionally or alternatively, the identifier 534 may indirectly identify a computing process 536 for execution by the computing device 504. For example, the computing device 504 may be coupled to a database 537 that stores identifiers 538, 540 and corresponding computing processes 542, 544. Upon receiving the identifier 534, the computing device 504 may query the database 537 for a corresponding computing process 536 within the database 537. The database 537 may provide the corresponding computing process 536 and/or may provide an identifier of the computing process 536. For example, the computing device 504 may include multiple computing processes that may be performed in response to identifiers received via audio transmissions, and the database 537 may provide an identifier of a process name, an ID number, and the like).

Once the corresponding computing process 536 is identified, the computing device 504 may execute the computing process 536. In certain implementations, the computing process 536 may include one or more of authenticating a user with a computing service, communicatively coupling two or more computing devices, processing a payment, matching a service provider to a customer, sending an email, triggering a predefined workflow, and the like. Certain additional embodiments are discussed in greater detail below.

One or more of the computing devices 502, 504 and the database 537 may be implemented the processors 514, 516 and/or the memories 518, 520 may implement one or more operational features of the computing devices 502, 504. Additionally or alternatively, although not depicted, the database 537 may be implemented by one or more processors and memories. For example, the memories 520, 520 may store instructions that, when executed by the processors 514, 516, because the processors 514, 516 to perform one or more operational features of the computing devices 502, 504. Additionally, the computing device 504 may be configured to communicate with the database 537 using a network. For example, the computing device 504 and the database 537 may communicate with the network using one or more wired network interfaces (e.g., Ethernet interfaces) and/or wireless network interfaces (e.g., Wi-Fi ^{®}, Bluetooth ^{®}, and/or cellular data interfaces). In certain instances, the network may be implemented as a local network (e.g., a local area network), a virtual private network, L1, and/or a global network (e.g., the Internet). In additional or alternative implementations, the database 537 may be implemented at least in part by the computing device 504.

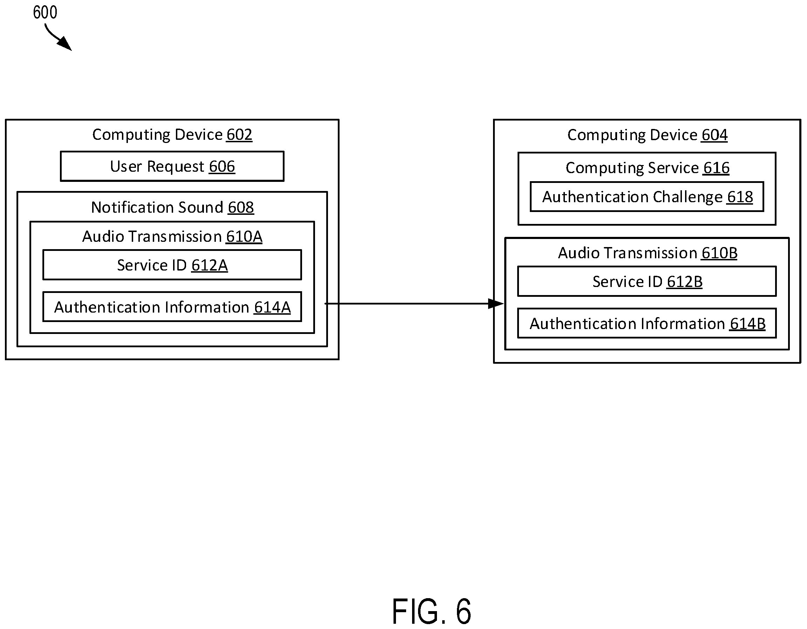

FIG. 6 illustrates a notification sound transmission scenario 600 to authenticate a user according to an exemplary embodiment of the present disclosure. The scenario 600 includes two computing devices 602, 604, which may be exemplary implementations of the computing devices 502, 504. In particular, the computing devices 602, 604 may be configured to communicate using audio transmissions included within notification sounds, similar to the computing devices 502, 504. In particular, the computing devices 602, 604 may be configured to communicate using audio transmissions in order to authenticate a user.

For example, the computing devices 602, 604 may communicate to authenticate a user with a computing service 616 executing on the computing device 604. For example, the computing service 616 may be executing on a smartphone or other computing device in use by an individual. In order to access or log into the computing service 616, the computing service 616 may issue an authentication challenge 618. The authentication challenge 618 may include one or more of a username and passcode challenge, a two-factor authentication challenge, or any other authentication verification technique. Upon receiving the authentication challenge 618 on the computing device 604, the user may request the other computing device 602 to authenticate the user. In particular, the computing device 602 may receive a user request 606 to authenticate the user. For example, in one instance, the computing device 604 may be a smartphone, tablet computer, or personal computer associated with the user and the computing device 602 may be a smart speaker associated with the user. In such instances, the user request 606 may be received as a voice request to a voice-enabled virtual assistant (e.g., Apple ^{®} Siri ^{®}, Google Assistant ^{®}, Amazon Alexa ^{®}, and the like) accessible via the smart speaker. As another example, the computing device 604 may be a tablet, laptop, or other personal computer associated with the user and the computing device 602 may be a smartphone associated with the user. In such instances, the user request 606 may be received via a graphical user interface from the user and/or via a request to a voice-enabled virtual assistant accessible via the computing device 602.

The computing device 602 may generate a notification sound 608 to authenticate the user. For example, the notification sound 608 may include an audio transmission 610A. The audio transmission 610A may include information necessary to authenticate the user. For example, the audio transmission 610A may contain a service ID 612A and authentication information 614A. The service ID 612A may include an identifier of the computing service 616. The computing service 616 for which authentication is needed may be identified based on the user request 606, which may identify the computing service 616 (e.g., a voice request to "authenticate me on Facebook", a request via the computing service 616). The audio transmission 610A may include the service ID 612A to ensure that the correct computing service 616 was identified. The audio transmission 610A may also include authentication information 614A. The authentication information 614A may include one or more of a user name, password, password hash, or other information that may be used to log into a computing service 604. Additionally or alternatively, the authentication information 614A may include a response to a two-factor authentication challenge, such as a numeric identifier, alphanumeric identifier, and the like.

In certain implementations, a user request 606 may not always be necessary. For example, rather than receiving a request from a user, a request may be received from an application, such as an application executing on the computing device 602. In one specific example, the computing device 602 may be a customer associated with a service platform, such as a rideshare or food delivery service platform, and the computing device 604 may be associated with a service provider of the service platform, such as a driver or food delivery provider. In such instances, authentication may be performed to ensure that, e.g., the customer enters the correct rideshare vehicle or the food delivery provider delivers the food to the correct customer. To perform such verification, the computing service 616 (e.g., the rideshare or food delivery application) may issue an authentication challenge 618. Rather than relying on a user request 606, the notification sound 608 may be automatically played on the computing device 602 in response to the occurrence of a triggering event (e.g., the arrival of a rideshare vehicle and/or a food delivery provider with a customer's order). In one specific example, the software application executing on the computing device 602 may be configured to issue a push notification on the computing device 602 when, e.g., a rideshare driver arrives and/or a food delivery provider arrives. In such instances, the notification sound 608 may be provided in connection with such a push notification. The authentication information 614A included within the notification sound 608 may fulfill the authentication challenge 618 (e.g., may include an alphanumeric identifier indicated by the authentication challenge 618). Accordingly, the notification sound 608 may automatically authenticate the user without requiring user input or requiring manual entry of any authentication information. Identifying devices using audio transmissions is discussed in greater detail in U.S. Provisional Patent Application No. 63/026,382, entitled "IDENTIFICATION AND VERIFICATION OF ASSOCIATED DEVICES USING AUDIO TRANSMISSIONS" and filed May 18, 2020, which is hereby incorporated by reference.

The computing device 604 may receive the audio transmission 610B, which may be a copy of the audio transmission 610 eight transmitted by the computing device 602. For example, the computing device 604 may receive the audio transmission 610B using a receiver and may be configured to extract the audio transmission 610B from other audio within the environment surrounding the computing devices 602, 604. Upon receiving the audio transmission 610B, the computing device 604 may extract the service ID 612B and the authentication information 614B, which may respectively be copies of the service ID 612A and the authentication information 614A. The computing device 604 may then validate the authentication information 614B. For example, the computing device 604 may compare the service ID 612B with an identifier of the computing service 616 to ensure that the authentication information 614B corresponds to the proper computing service 616. In certain implementations, however, the service ID 612A, B may be omitted from the audio transmission 610A, B. For example, the audio transmission 610A, B may omit the service ID 612A, B and instead include only the authentication 614A, B and, optionally, other information (not depicted).

The computing device 604 may then validate the authentication information 614B. For example, the computing device 604 may execute a computing process to provide the authentication information 614B to the computing service 616. The computing service 616 may then use the authentication information 614B as an input response to the authentication challenge 618. If the authentication challenge 618 is successfully passed using the authentication information 614B, the user may be authenticated (e.g., with the computing service 616). For example, where the user is logging into an application or online service, the user may be logged in upon validation of the authentication information 614B. As another example, where the user is authenticating with a service provider, the computing service 616 may execute to confirm that the user has located the correct service provider (e.g., the correct rideshare vehicle, the correct food delivery customer).

In this way, audio transmissions may be automatically transmitted with notification sounds to authenticate the user with one or more computing services. By automating the exchange of authentication information, these techniques may improve the security of authenticating with computing services. Furthermore, by utilizing communication standards that do not rely on conventional RF transmission techniques or existing wireless network infrastructure, these techniques may further avoid security attacks that exploit weaknesses in these networks and techniques. In particular, such techniques may help avoid man-in-the-middle or similar attacks that intercept authentication credentials and information exchanges between the computing devices 602, 604.

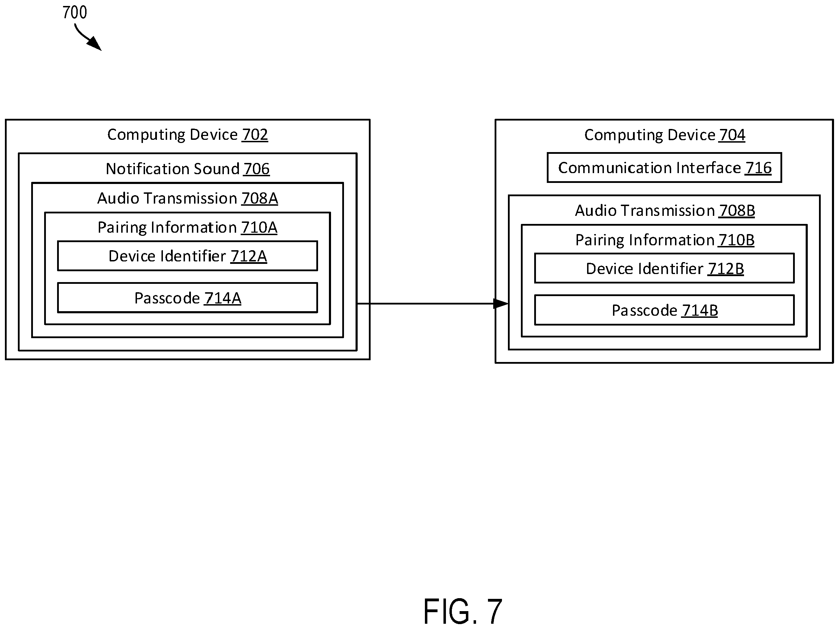

FIG. 7 illustrates a notification sound transmission scenario 700 for communicatively coupling computing devices 702, 704 according to an exemplary embodiment of the present disclosure. For example, in the scenario 700, the computing device 704 may be attempting to communicatively couple with the computing device 702. In certain implementations, the computing device 702 may include one or more of a Bluetooth ^{®} device (e.g., a Bluetooth ^{®} speaker), a wireless network access point, a smart home device, a video game console, and the like. Smart home devices may include home devices (e.g., wall plugs, lightbulbs, light switches, televisions, home appliances, and the like) configured to communicate using one or more of Wi-Fi ^{®}, Bluetooth ^{®}, ZigBee ^{®}, or other RF-based communication protocols. The computing device 704 includes a communication interface 716, which may include one or more wireless communication interfaces. In particular, the communication interface 716 may be configured using wireless communication techniques that rely on RF transmissions, such as Bluetooth, Wi-Fi, 3G, LTE, 4G, 5G, and the like.

To expedite the communicative coupling of the computing devices 702, 704, pairing information 710A, B may be exchanged between the computing devices 702, 704. In particular, rather than having to manually locate and identify pairing information 710A, B, the pairing information 710A, B may be provided to the computing device 704 using an audio transmission 708A. Using techniques similar to those discussed above, the computing device 702 may generate a notification sound 706 that contains an audio transmission 708A. The notification sound 706 may be generated in response to a request from a user. For example, the user may press a physical button on the computing device 702 and/or may issue a request via a software application to communicatively couple a computing device 704 with the computing device 702. In response, the computing device 702 may generate the notification sound 706 and the audio transmission 708A. In certain instances, the audio transmission 708A may be previously generated. For example, the contents of the audio transmission 708A may be static across multiple operations (e.g., across multiple requests to communicatively couple multiple computing devices). As explained further above, the notification sound 706 may, in certain instances, include an audible portion to provide audible feedback for the notification sound 706 and the transmission of the audio transmission 708A.

The audio transmission 708A may include the pairing information 710A. For example, the pairing information 710A may include a device identifier 712A and a passcode 714A. The device identifier 712A may include an identifier of the computing device 702 (e.g., a device name, device address, Bluetooth ^{®} identifier, and the like). The passcode 714A may include a numeric, alphanumeric, or similar password required to communicatively couple with the computing device 702. In one specific example, the computing device 702 may be an access point implementing at least a portion of a wireless Wi-Fi ^{®} network, the device identifier 712A may include a name of the network (e.g., an SSID of the wireless network), and the passcode 714A may include an alphanumeric password to the wireless network.

The computing device 702 may play back the notification sound 706, thereby transmitting the audio transmission 708A. The computing device 704 may receive the audio transmission 708B, which may be a copy of the audio transmission 708A (e.g., including copies of the pairing information 710B, the device identifier 712B, and the passcode 714B). The computing device 704 may then use the pairing information 710B to communicatively couple with the computing device 702. For example, using the communication interface 716, the computing device 704 may locate the computing device and/or wireless network identified by the device identifier 712B and may provide the passcode 714B. In response, the computing device 702 may validate the pairing information provided via the communication interface 716 and communicatively couple with the computing device 704, granting access to the computing device 702 and/or a wireless network implemented by the computing device 702.

In additional or alternative implementations, the techniques discussed above may be performed to communicatively couple with a computing device other than the computing device 702. For example, the computing device 704 may be communicatively coupling with a different computing device and/or with a wireless network implemented by computing device other than the computing device 702. As a specific example, the computing device 704 may be a smartphone or other personal computing device seeking to pair with a wireless network implemented by a wireless network access point. In such instances, the computing device 702 may be a different smartphone or other personal computing device that provides the pairing information 710A for the wireless network.

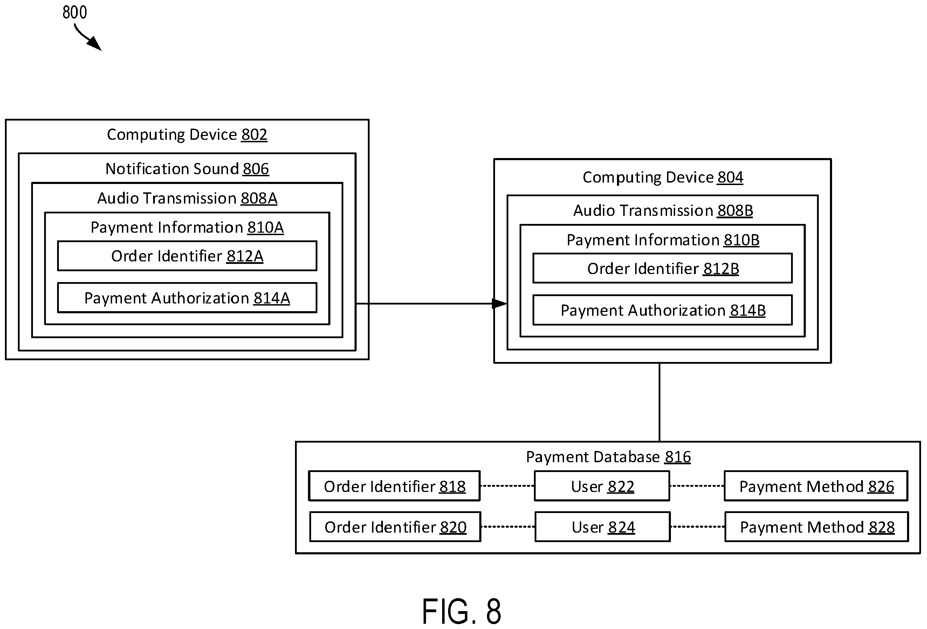

FIG. 8 illustrates a notification sound transmission scenario 800 to process a payment according to an exemplary embodiment of the present disclosure. For example, a payment may be processed for a user associated with a first computing device 802 by transmitting payment information 810A to a second computing device 804. For example, in one implementation, the computing device 802 may be associated with a customer or other user needing to make a payment, and the computing device 802 may be configured to transmit payment information 810A to the computing device 804 (e.g., a point-of-sale device or other computing device associated with a merchant) so that the computing device 804 can process the payment. As another example, the computing device 802 may be associated with a merchant (e.g., may be a point-of-sale device or other computing device located within a retail facility or the like) and the computing device 804 may be associated with a customer.

In particular, to transmit the payment information 810A, the computing device 802 may generate a notification sound 806 that includes an audio transmission 808A. For example, an ultrasonic portion of the notification sound 806 may contain the audio transmission 808A. In certain implementations, the notification sound 806 may further include an audible portion, as discussed above. The audio transmission 808A may contain the payment information 810A. For example, the payment information 810A may be contained within a payload portion of the audio transmission 808A. In certain implementations, the notification sound 806 may be generated at the request of the user. For example, the user may request, via the computing device 802, that payment be processed for an order (e.g., an order for goods or services created using application executing on the computing device 802). In response, the computing device 802 may generate and transmit a notification sound 806. As another example, an application executing on the computing device 802 may receive an indication that a user associated with the computing device 802 has picked up or otherwise received the contents of an order. In response, the computing device 802 may generate a notification indicating that the order has been picked up, and the notification may include the notification sound 806 in order to process payment for the order. As a further example, an application executing on the computing device 802 may receive a request to authenticate a purchase made by a user (e.g., to pick up an order in person that was paid for via an online ecommerce platform). In response, the computing device 802 may generate a notification with a notification sound that contains an order number and authentication information for a payment for the order. Additional implementations may be apparent to those skilled in the art based on the contents of the present disclosure, and all such implementations are considered within the scope of the present disclosure.

The payment information 810A may include an order identifier 812A and/or a payment authorization 814A. The order identifier 812A may include a numeric or alphanumeric identifier of an order or other purchase for which payment is to be made. For example, a user may prepare an order by, e.g., selecting one or more goods or services for purchase. The order may be assigned an order identifier 812A, which may be included within the payment information 810A. The payment information 810A may also include payment authorization 814A. The payment authorization 814A may include payment information and/or an authorization identifier (e.g., a numeric or alphanumeric passcode) necessary to approve or process payment on behalf of a user. For example, payment information may be stored in a payment database 816 communicatively coupled to the computing device 804. The payment authorization 814A may include a passcode or password established by a user prior to storing their payment information in the payment database.

The computing device 804 may receive the audio transmission 808B, which may include payment information 810B. The audio transmission 808B and the payment information 810B may respectively be copies of the audio transmission 808A and the payment information 810A. The order identifier 812B and the payment authorization 814B may be identical to the order identifier 812A and the payment authorization 814A. After receiving the audio transmission 808B, the computing device 804 may extract the payment information 810B, including the order identifier 812B and the payment authorization 814B. The computing device 804 may then proceed with processing payment according to one or more payment protocols. For example, the computing device 804 may communicate with the payment database 816 (e.g., via a wired or wireless network interface). In particular, the payment database 816 may store order identifiers 818, 820 associated with users 822, 824 and/or payment methods 826, 828. The computing device 804 may identify an order corresponding to the order identifier 812B within the payment database 816. The order identifier 812B may be associated with a user and a payment method within the payment database 816. However, accessing and/or processing the payment using the payment method within the payment database 816 may require proof of authorization. Accordingly, the payment authorization 814B may be provided to the payment database 816 for verification. If the correct payment authorization 814B is provided, the computing device 804 may receive and process payment with a payment method associated with the user from the payment database 816.

Additional or alternative payment processing implementations may differ from those discussed above. For example, certain implementations may omit the payment authorization 814A, B. In one such example, the computing device 802 may be associated with a merchant and the computing device 804 may be associated with a customer. In such instances, the payment information 810A, B may omit the payment authorization 814A, B, because the customer needs to provide the payment authorization (e.g., via the computing device 804) prior to processing the payment.

It should be further understood that the scenarios 600, 700, 800 are merely exemplary implementations of the techniques discussed herein. Other implementations or use cases may be readily apparent to one skilled in the art in light of these examples and the present disclosure. For example, other implementations may use audio transmissions that contain additional information and/or that omit certain types of information discussed above. Additionally or alternatively, implementations may execute other types of computing processes in response to receiving audio transmissions. For example, other implementations may include computing processes that send an email, trigger a predefined workflow, and the like. All such implementations are hereby considered within the scope of the present disclosure.

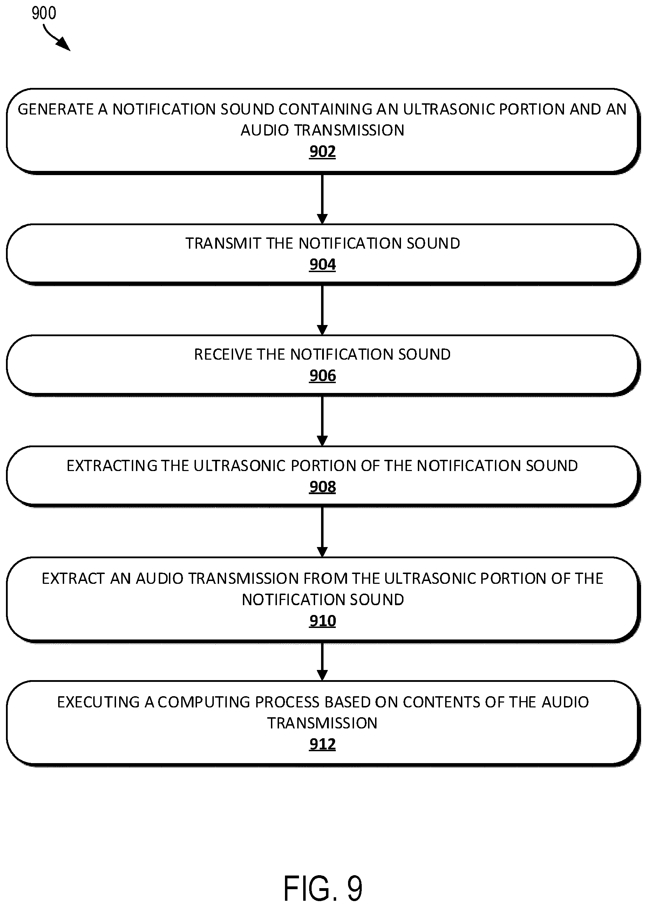

FIG. 9 illustrates a method 900 according to an exemplary embodiment of the present disclosure. The method 900 may be performed to transmit audio transmissions using notification sounds and performing one or more computing processes in response to the audio transmissions. The method 900 may be implemented on a computer system. For example, the method 900 may be implemented by one or more of the computing devices 102, 104, 302, 304, 502, 504, 602, 604, 702, 704, 802, 804 and/or the databases 537, 816. The method 900 may also be implemented by a set of instructions stored on a computer readable medium that, when executed by a processor, cause the computer system to perform the method 900. For example, all or part of the method 900 may be implemented by the processors 514, 516 and the memories 518, 520. Although the examples below are described with reference to the flowchart illustrated in FIG. 9, many other methods of performing the acts associated with FIG. 9 may be used. For example, the order of some of the blocks may be changed, certain blocks may be combined with other blocks, one or more of the blocks may be repeated, and some of the blocks described may be optional.

The method 900 may begin with generating a notification sound containing an ultrasonic portion and an audio transmission (block 902). For example, a first computing device 502 may generate a notification sound 524. The notification sound 524 may include an ultrasonic portion 530. In certain implementations, the off notification sound 524 may also include an audible portion 528, which may include audible frequencies detectable by a human ear. In certain implementations, the audible portion 528 and the ultrasonic portion 530 may occur at least partially at the same time. In additional or alternative implementations, the audible portion 528 and the ultrasonic portion 530 may occur at different times. The ultrasonic portion may contain an audio transmission 531. For example, the audio transmission 531 may be modulated onto one or more symbols occurring during at least a portion of the notification sound 524. In particular, the audio transmission 531 may be generated to include a payload 532, which may include information for use by another computing device. For example, the payload 532 may include an identifier 534 of a computing process to be performed by another computing device. In certain implementations, the payload 532 may include additional or alternative information or data, such as a service ID 612A, authentication information 614A, pairing information 710A, and payment information 710A.

The notification sound may be transmitted (block 904). For example, the notification sound 524 may be transmitted from the first computing device 502. In particular, the computing device 502 may be transmitted by a transmitter 506 of the computing device 502, such as a speaker of the computing device 502. For example, the notification sound 524 may be generated as an audio file containing ultrasonic frequencies and/or audible frequencies occurring at different times. Transmitting the notification sound 524 may accordingly involve playing back the audio file using the transmitter 506.

The notification sound may be received (block 902). For example, the notification sound 524 may be received at a second computing device 504. In particular, and as explained above, the second computing device 504 may receive the notification sound 524 using a receiver 512, such as a microphone of the computing device 504. In certain instances, the receiver 512 may be configured to receive audio data from an environment surrounding the computing device 504, which may contain notification sound 524 and/or audio transmissions 531.

The ultrasonic portion of the notification sound may be extracted (block 908). For example, the second computing device 504 may extract the ultrasonic portion 530 of the notification sound 524. In one specific example, the computing device 504 may be configured to detect ultrasonic audio data containing audio transmissions. The computing device 504 may apply a high-pass filter to received audio data in order to filter out non-ultrasonic audio frequencies (e.g., frequencies below 20 kHz, 18 kHz, 15 kHz).

An audio transmission may be extracted from the ultrasonic portion of the notification sound (block 910). For example, the computing device 504 may extract from the ultrasonic portion 530 of the notification sound 524. In particular, and as explained above, the computing device 504 may analyze the filtered audio data for a predetermined portion (e.g., a preamble) of the audio transmission 531. Upon detecting the predetermined portion, the computing device 504 may determine that the received audio data contains an audio transmission 531. The computing device 504 may then extract the audio transmission 531 from the received audio data (e.g., based on a time at which the predetermined portion was detected).

A computing process may be executed based on contents of the audio transmission (block 912). For example, the second computing device 504 may execute a computing process 536 based at least in part on the contents of the audio transmission 531. The computing process may include one or more of authenticating a user with a computing service, communicatively coupling two or more computing devices, processing a payment, matching a service provider to a customer, sending an email, triggering a predefined workflow, and the like. For example, a payload 532 of the audio transmission 531 may contain an identifier 534 of the computing process 536 to be executed by the computing device 504. In certain instances, the identifier 534 may directly identify the computing process 536 to be executed. In additional or alternative implementations, the identifier 534 may indirectly identify the computing process 536. For example, the computing device 504 may be communicatively coupled to a database 537. In such instances, the database 537 may be queried to determine a computing process 536 corresponding to a received identifier 534. In certain instances, such as the scenarios 600, 700, 800, received audio transmissions may include additional information (e.g., service IDs, authentication information, pairing information, payment information) to be used when executing the computing process. In such instances, the included information may be provided to the computing process 536 by the computing device 504.

In this way, the method 900 may enable computing devices to communicate with each other using audio transmissions that are included within notification sounds utilized by the computing devices. Such implementations may enable audio transmissions to be transmitted without requiring special audio frameworks to be implemented on the computing devices. Furthermore, the audio transmissions may be transmitted to trigger execution of computing processes. Accordingly, these communications may enable the automation of computing processes, including authenticating users, communicatively coupling devices, and triggering or processing payments. Thus, these techniques may be used to automate technical processes and may increase security (e.g., when authenticating users and/or communicatively coupling devices) for the computing devices. Furthermore, because the audio transmissions are not exchanged using existing infrastructure networks, the communication may be less susceptible to security threats and interception. Accordingly, these techniques may improve the security of exchanged information, such as authentication information, pairing information, payment information, and the like.

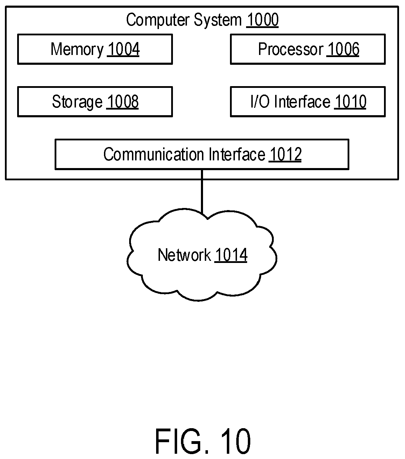

FIG. 10 illustrates an example computer system 1000 that may be utilized to implement one or more of the devices and/or components discussed herein, such as the computing devices 102, 104, 302, 304, 502, 504, 602, 604, 702, 704, 802, 804 and/or the databases 537, 816. In particular embodiments, one or more computer systems 1000 perform one or more steps of one or more methods described or illustrated herein, such as the method 900. In particular embodiments, one or more computer systems 1000 provide the functionalities described or illustrated herein. In particular embodiments, software running on one or more computer systems 1000 performs one or more steps of one or more methods described or illustrated herein or provides the functionalities described or illustrated herein. Particular embodiments include one or more portions of one or more computer systems 1000. Herein, a reference to a computer system may encompass a computing device, and vice versa, where appropriate. Moreover, a reference to a computer system may encompass one or more computer systems, where appropriate.

This disclosure contemplates any suitable number of computer systems 1000. This disclosure contemplates the computer system 1000 taking any suitable physical form. As example and not by way of limitation, the computer system 1000 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, the computer system 1000 may include one or more computer systems 1000; be unitary or distributed; span multiple locations; span multiple machines; span multiple data centers; or reside in a cloud, which may include one or more cloud components in one or more networks. Where appropriate, one or more computer systems 1000 may perform without substantial spatial or temporal limitation one or more steps of one or more methods described or illustrated herein. As an example and not by way of limitation, one or more computer systems 1000 may perform in real time or in batch mode one or more steps of one or more methods described or illustrated herein. One or more computer systems 1000 may perform at different times or at different locations one or more steps of one or more methods described or illustrated herein, where appropriate.

In particular embodiments, computer system 1000 includes a processor 1006, memory 1004, storage 1008, an input/output (I/O) interface 1010, and a communication interface 1012. Although this disclosure describes and illustrates a particular computer system having a particular number of particular components in a particular arrangement, this disclosure contemplates any suitable computer system having any suitable number of any suitable components in any suitable arrangement.

In particular embodiments, the processor 1006 includes hardware for executing instructions, such as those making up a computer program. As an example and not by way of limitation, to execute instructions, the processor 1006 may retrieve (or fetch) the instructions from an internal register, an internal cache, memory 1004, or storage 1008; decode and execute the instructions; and then write one or more results to an internal register, internal cache, memory 1004, or storage 1008. In particular embodiments, the processor 1006 may include one or more internal caches for data, instructions, or addresses. This disclosure contemplates the processor 1006 including any suitable number of any suitable internal caches, where appropriate. As an example and not by way of limitation, the processor 1006 may include one or more instruction caches, one or more data caches, and one or more translation lookaside buffers (TLBs). Instructions in the instruction caches may be copies of instructions in memory 1004 or storage 1008, and the instruction caches may speed up retrieval of those instructions by the processor 1006. Data in the data caches may be copies of data in memory 1004 or storage 1008 that are to be operated on by computer instructions; the results of previous instructions executed by the processor 1006 that are accessible to subsequent instructions or for writing to memory 1004 or storage 1008; or any other suitable data. The data caches may speed up read or write operations by the processor 1006. The TLBs may speed up virtual-address translation for the processor 1006. In particular embodiments, processor 1006 may include one or more internal registers for data, instructions, or addresses. This disclosure contemplates the processor 1006 including any suitable number of any suitable internal registers, where appropriate. Where appropriate, the processor 1006 may include one or more arithmetic logic units (ALUs), be a multi-core processor, or include one or more processors 1006. Although this disclosure describes and illustrates a particular processor, this disclosure contemplates any suitable processor.

In particular embodiments, the memory 1004 includes main memory for storing instructions for the processor 1006 to execute or data for processor 1006 to operate on. As an example, and not by way of limitation, computer system 1000 may load instructions from storage 1008 or another source (such as another computer system 1000) to the memory 1004. The processor 1006 may then load the instructions from the memory 1004 to an internal register or internal cache. To execute the instructions, the processor 1006 may retrieve the instructions from the internal register or internal cache and decode them. During or after execution of the instructions, the processor 1006 may write one or more results (which may be intermediate or final results) to the internal register or internal cache. The processor 1006 may then write one or more of those results to the memory 1004. In particular embodiments, the processor 1006 executes only instructions in one or more internal registers or internal caches or in memory 1004 (as opposed to storage 1008 or elsewhere) and operates only on data in one or more internal registers or internal caches or in memory 1004 (as opposed to storage 1008 or elsewhere). One or more memory buses (which may each include an address bus and a data bus) may couple the processor 1006 to the memory 1004. The bus may include one or more memory buses, as described in further detail below. In particular embodiments, one or more memory management units (MMUs) reside between the processor 1006 and memory 1004 and facilitate accesses to the memory 1004 requested by the processor 1006. In particular embodiments, the memory 1004 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1004 may include one or more memories 1004, where appropriate. Although this disclosure describes and illustrates particular memory implementations, this disclosure contemplates any suitable memory implementation.

In particular embodiments, the storage 1008 includes mass storage for data or instructions. As an example and not by way of limitation, the storage 1008 may include a hard disk drive (HDD), a floppy disk drive, flash memory, an optical disc, a magneto-optical disc, magnetic tape, or a Universal Serial Bus (USB) drive or a combination of two or more of these. The storage 1008 may include removable or non-removable (or fixed) media, where appropriate. The storage 1008 may be internal or external to computer system 1000, where appropriate. In particular embodiments, the storage 1008 is non-volatile, solid-state memory. In particular embodiments, the storage 1008 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1008 taking any suitable physical form. The storage 1008 may include one or more storage control units facilitating communication between processor 1006 and storage 1008, where appropriate. Where appropriate, the storage 1008 may include one or more storages 1008. Although this disclosure describes and illustrates particular storage, this disclosure contemplates any suitable storage.

In particular embodiments, the I/O Interface 1010 includes hardware, software, or both, providing one or more interfaces for communication between computer system 1000 and one or more I/O devices. The computer system 1000 may include one or more of these I/O devices, where appropriate. One or more of these I/O devices may enable communication between a person (i.e., a user) and computer system 1000. As an example and not by way of limitation, an I/O device may include a keyboard, keypad, microphone, monitor, screen, display panel, mouse, printer, scanner, speaker, still camera, stylus, tablet, touch screen, trackball, video camera, another suitable I/O device or a combination of two or more of these. An I/O device may include one or more sensors. Where appropriate, the I/O Interface 1010 may include one or more device or software drivers enabling processor 1006 to drive one or more of these I/O devices. The I/O interface 1010 may include one or more I/O interfaces 1010, where appropriate. Although this disclosure describes and illustrates a particular I/O interface, this disclosure contemplates any suitable I/O interface or combination of I/O interfaces.

In particular embodiments, communication interface 1012 includes hardware, software, or both providing one or more interfaces for communication (such as, for example, packet-based communication) between computer system 1000 and one or more other computer systems 1000 or one or more networks 1014. As an example and not by way of limitation, communication interface 1012 may include a network interface controller (NIC) or network adapter for communicating with an Ethernet or any other wire-based network or a wireless NIC (WNIC) or wireless adapter for communicating with a wireless network, such as a Wi-Fi network. This disclosure contemplates any suitable network 1014 and any suitable communication interface 1012 for the network 1014. As an example and not by way of limitation, the network 1014 may include one or more of an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1000 may communicate with a wireless PAN (WPAN) (such as, for example, a Bluetooth^{®} WPAN), a WI-FI network, a WI-MAX network, a cellular telephone network (such as, for example, a Global System for Mobile Communications (GSM) network), or any other suitable wireless network or a combination of two or more of these. Computer system 1000 may include any suitable communication interface 1012 for any of these networks, where appropriate. Communication interface 1012 may include one or more communication interfaces 1012, where appropriate. Although this disclosure describes and illustrates a particular communication interface implementations, this disclosure contemplates any suitable communication interface implementation.

The computer system 1002 may also include a bus. The bus may include hardware, software, or both and may communicatively couple the components of the computer system 1000 to each other. As an example and not by way of limitation, the bus may include an Accelerated Graphics Port (AGP) or any other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local bus (VLB), or another suitable bus or a combination of two or more of these buses. The bus may include one or more buses, where appropriate. Although this disclosure describes and illustrates a particular bus, this disclosure contemplates any suitable bus or interconnect.

Herein, a computer-readable non-transitory storage medium or media may include one or more semiconductor-based or other types of integrated circuits (ICs) (e.g., field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, features, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

All of the disclosed methods and procedures described in this disclosure can be implemented using one or more computer programs or components. These components may be provided as a series of computer instructions on any conventional computer readable medium or machine readable medium, including volatile and non-volatile memory, such as RAM, ROM, flash memory, magnetic or optical disks, optical memory, or other storage media. The instructions may be provided as software or firmware, and may be implemented in whole or in part in hardware components such as ASICs, FPGAs, DSPs, or any other similar devices. The instructions may be configured to be executed by one or more processors, which when executing the series of computer instructions, performs or facilitates the performance of all or part of the disclosed methods and procedures.

It should be understood that various changes and modifications to the examples described here will be apparent to those skilled in the art. Such changes and modifications can be made without departing from the spirit and scope of the present subject matter and without diminishing its intended advantages. It is therefore intended that such changes and modifications be covered by the appended claims.

All of the disclosed methods and procedures described in this disclosure can be implemented using one or more computer programs or components. These components may be provided as a series of computer instructions on any conventional computer readable medium or machine readable medium, including volatile and non-volatile memory, such as RAM, ROM, flash memory, magnetic or optical disks, optical memory, or other storage media. The instructions may be provided as software or firmware, and may be implemented in whole or in part in hardware components such as ASICs, FPGAs, DSPs, or any other similar devices. The instructions may be configured to be executed by one or more processors, which when executing the series of computer instructions, performs or facilitates the performance of all or part of the disclosed methods and procedures.

It should be understood that various changes and modifications to the examples described here will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A method comprising:
generating, at a first computing device, a notification sound containing an ultrasonic portion and an audio transmission, wherein the ultrasonic portion contains the audio transmission;
transmitting the notification sound from the first computing device in response to a request from an application executing on the first computing device;
receiving the notification sound at a second computing device;
extracting, at the second computing device, the ultrasonic portion of the notification sound;
extracting the audio transmission from the ultrasonic portion of the notification sound; and
executing, on the second computing device, a computing process based on contents of the audio transmission.

2. The method of claim 1, wherein the request is a push notification request.

3. The method of claim 1, wherein the notification sound further includes an audible portion.

4. The method of claim 3, wherein the audible portion and ultrasonic portion occur at least partially at the same time during the notification sound.

5. The method of claim 1, wherein the audio transmission contains a payload that identifies the computing process.

6. The method of claim 5, wherein the payload contains a static identifier associated with one or more of the first computing device and the application executing on the first computing device.

7. The method of claim 6, wherein the computing process is identified based on an identifier corresponding to the static identifier in a database.

8. The method of claim 6, wherein the payload contains a dynamic identifier uniquely generated to identify the computing process.

9. The method of claim 1, wherein the computing process includes processing a payment.

10. The method of claim 1, wherein the computing process includes authenticating a user with a digital service.

11. The method of claim 10, wherein the notification sound is transmitted in response to a voice request received by the first computing device.

12. The method of claim 11, wherein the first computing device is a smart speaker associated with a voice assistant and the second computing device requires authentication.

13. The method of claim 1, wherein the computing process includes communicatively coupling the first and second computing devices.

14. The method of claim 13, wherein at least one of the first computing device and the second computing device is at least one of a wireless speaker, a wireless network access point, a smart home device, and a video game console.

15. A system, comprising:
a processor; and
a memory storing instructions which, when executed by the processor, cause the processor to:
generate, at a first computing device, a notification sound containing an ultrasonic portion and an audio transmission, wherein the ultrasonic portion contains the audio transmission;
transmit the notification sound from the first computing device in response to a request from an application executing on the first computing device;
receive the notification sound at a second computing device;
extract, at the second computing device, the ultrasonic portion of the notification sound;
extract an audio transmission from the ultrasonic portion of the notification sound;and
execute, on the first computing device, a computing process based on contents of the audio transmission.
